# EUROPEAN PATENT SPECIFICATION

(11) **EP 2 535 239 B1**
(45) Date of publication and mention of the grant of the patent: **29.10.2014**
(21) Application number: 12169123.2
(22) Date of filing: 23.05.2012
(51) Int. Cl.: B62D 1/19

(54) **Steering apparatus**
Lenkvorrichtung
Dispositif de direction

(30) Priority: 16.06.2011 JP 2011134331
(43) Date of publication of application: 19.12.2012
(73) Proprietor: JTEKT CORPORATION, Osaka-shi Osaka 542-8502 (JP)
(72) Inventor: Kuroumaru, Yoshikazu, Osaka-shi, Osaka 542-8502 (JP)
(74) Representative: Winter, Brandl, Fürniss, Hübner, Röss, Kaiser, Polte - Partnerschaft mbB

(56) References cited:
- WO-A2-2010/026552
- JP-A- 2011 025 856
- US-A1- 2002 033 593

## Description

### BACKGROUND OF THE INVENTION

### 1. Field of the Invention

The invention relates to a steering apparatus that is configured such that a steering column is detached from a vehicle body when a load higher than or equal to a predetermined load, which is directed toward the front of a vehicle, is applied to the steering apparatus in the event of, for example, a secondary collision. 2. Discussion of Background

For example, Japanese Patent Application Publication No. 2011-025856 (JP 2011-025856A) describes a steering apparatus according to the preamble of claim 1 that is configured such that when a vehicle frontal collision occurs and a driver collides with a steering wheel due to an inertial action (secondary collision occurs), a steering column is detached from a vehicle body for the purpose of impact relaxation.

In the steering apparatus described in JP 2011-025856A, first rearward extending portions (support rails) are provided to prevent excessive downward displacement of the steering apparatus that is detached from the vehicle body in the event of a secondary collision. The first rearward extending portions extend from an upper attachment bracket (upper bracket) of the steering apparatus, which is used to attach the steering column to the vehicle body, toward the rear of a vehicle body (toward a driver seat). The steering column is supported so as to be pivotable about its lower end portion (end portion closer to the front of the vehicle body than the other end portion), and is fixed at its upper-side portion (a portion closer to the rear of the vehicle body than the other portion) to the vehicle body via the upper attachment bracket. The upper attachment bracket is coupled to the vehicle body via capsules (detachable members). The capsules are fixed to the upper attachment bracket such that the upper attachment bracket is detached from the capsules when a load higher than or equal to the predetermined load, which is directed toward the front of the vehicle, is applied to the steering apparatus. The steering apparatus. The capsules are fixed to the vehicle body with bolts, whereby the upper attachment bracket is fixed to the vehicle body via the capsules. When the driver collides with the steering wheel, that is, when a secondary collision occurs, and a load higher than or equal to the predetermined load, which is directed toward the front of the vehicle, is applied to the steering apparatus, the steering column together with the upper attachment bracket is detached from the capsules fixed to the vehicle body.

After the detachment, an outer tube that constitutes the steering column makes collapsing movement toward the front of the vehicle body along an inner tube to contract the steering column, thus absorbing impact energy at the time of the collision. At this time, in a section in which the outer tube makes collapsing movement toward the front of the vehicle body along the inner tube, the first rearward extending portions that move toward the front of the vehicle together with the outer tube slide relative to the capsules and are kept engaged with the capsules. Therefore, it is possible to avoid the situation where the steering column detached from the vehicle body pivots downward about the lower end portion and the steering apparatus is displaced downward excessively.

In the steering apparatus described in JP 2011-025856A, the first rearward extending portions, which prevent excessive downward displacement of the steering apparatus that is detached from the vehicle body in the event of a secondary collision, extend from the upper attachment bracket (upper bracket) of the steering apparatus toward the rear of the vehicle (toward the driver seat). However, an area (driver seat-side area) behind an upper-side (driver seat-side) attachment site at which the steering apparatus is attached to the vehicle body is often used as an area in which various components attached to the vehicle body are arranged. Therefore, a component arrangement space behind the attachment site, at which the steering apparatus is attached to the vehicle body, is reduced due to provision of the first rearward extending portions that extend toward the rear of the vehicle. This causes some problems that, for example, the types or the number of the components that may be arranged are limited and the layout of component arrangement is limited.

### SUMMARY OF THE INVENTION

The invention provides a steering apparatus that is able to prevent excessive downward displacement of a steering apparatus that is detached from a vehicle body in the event of a secondary collision, and that is able to ensure a relatively wide arrangement space on the driver seat side with respect to the steering apparatus.

According to a feature of an example of the invention, when a load higher than or equal to a predetermined load, which is directed toward the front of a vehicle, is applied to a steering apparatus in the event of a secondary collision, a mounting member is detached from a detachable member fixed to a body of the vehicle. That is, a steering column is detached from the body of the vehicle together with the mounting member. After the detachment, the steering column makes collapsing movement while absorbing impact energy using an impact absorbing mechanism. At this time, the mounting member moves toward the front of the vehicle while sliding over the guide member. Therefore, the steering column is not excessively displaced downward in the process of collapsing movement. During normal times before a secondary collision occurs, the guide member extends from a portion, at which the guide member is fixed together with the detachable member, toward the front of the vehicle. Therefore, a relatively wide arrangement space is ensured on the rear side with respect to the detachable member. Thus, it is possible to prevent excessive downward displacement of the steering apparatus that is detached from the body of the vehicle in the event of a secondary collision, and it is possible to ensure a relatively wide space on the driver seat side with respect to the steering apparatus before detachment.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG 1 is a sectional view of a steering apparatus according to a first embodiment of the invention, which is taken along the axis of a steering column;
FIG. 2 is a sectional view taken along the line A-A in FIG. 1;
FIG. 3 is a side sectional view of main portions of the steering apparatus;
FIG. 4 is a plan view of the main portions of the steering apparatus;
FIG. 5 is a side sectional view of the main portions of the steering apparatus after detachment;
FIG. 6 is an exploded perspective view that shows a guide member fitting structure;
FIG. 7 is an exploded perspective view that shows a guide member fitting structure according to a second embodiment of the invention;
FIG. 8A is an exploded perspective view that shows a guide member fitting structure according to a third embodiment of the invention; and
FIG. 8B is a schematic side view that shows the guide member fitting structure according to the third embodiment.

### DETAILED DESCRIPTION OF EMBODIMENTS

Hereafter, embodiments of the invention will be described with reference to the accompanying drawings.

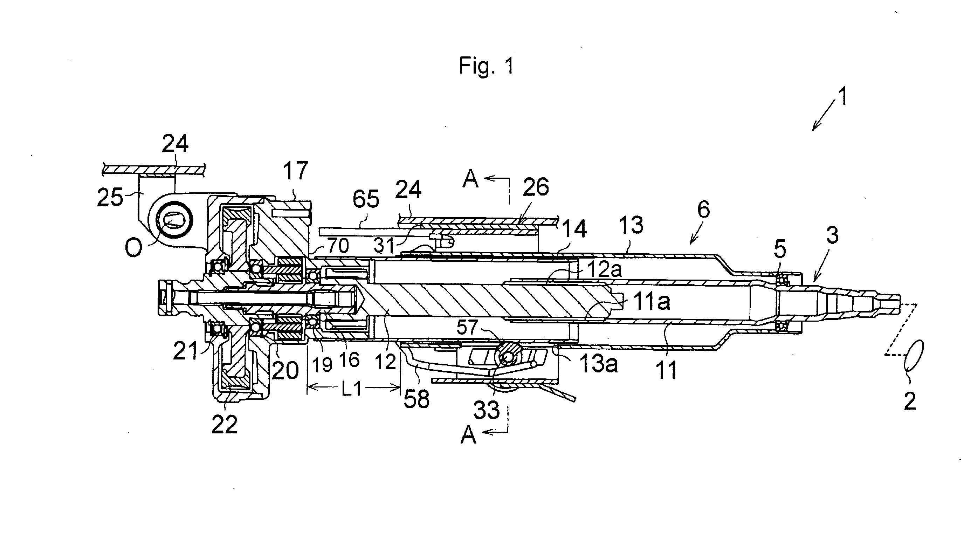

First, a first embodiment of the invention will be described with reference to FIG. 1 to FIG. 6. As shown in FIG. 1, a steering apparatus 1 includes a steering shaft 3. A steering wheel 2 is fixed to a rear-side (right-side in FIG. 1) end portion of the steering shaft 3 (the rear-side end portion is the end portion closer to the rear of the vehicle than the other end portion). The steering shaft 3 is supported by a bearing 5, so that the steering shaft 3 is rotatably accommodated in a steering column 6. A front-side (left-side in FIG. 1) end portion of the steering shaft 3 is coupled to an intermediate shaft (not shown) via a universal joint (the front-side end portion is the end portion closer to the front of the vehicle than the rear-side end portion). Thus, rotation and steering torque resulting from a steering operation are transmitted to a steered mechanism, such as a rack and pinion mechanism. The steered mechanism changes the steered angle of steered wheels (not shown). Note that the steering shaft 3 is mounted on the vehicle so as to be inclined such that the front-side end portion is located below the rear-side end portion in the vertical direction.

In addition, the steering apparatus 1 has a tilt function of adjusting the position of the steering wheel 2 in the vertical direction and a telescopic function of adjusting the position of the steering wheel 2 in the axial direction of the steering shaft 3.

The steering shaft 3 includes a hollow upper shaft 11 and a lower shaft 12. The steering wheel 2 is fixed to the upper shaft 11. The lower shaft 12 is accommodated in the upper shaft 11. A spline fitting portion 11a is formed on the inner periphery of the upper shaft 11, and a spline fitting portion 12a is formed on the outer periphery of the lower shaft 12. The spline fitting portion 11 a of the upper shaft 11 and the spline fitting portion 12a of the lower shaft 12 are spline-fitted to each other. As a result, the upper shaft 11 and the lower shaft 12 are slidable relative to each other in the axial direction, and rotatable together with each other.

The steering column 6 includes an outer tube 13 and an inner tube 14. The outer tube 13 accommodates and supports the upper shaft 11 via the bearing 5. The inner tube 14 accommodates the lower shaft 12. The inner tube 14 is inserted in the inner periphery of the outer tube 13. Thus, the outer tube 13 is slidable relative to the inner tube 14 in the axial direction.

A housing 17 is provided at a front-side end of the inner tube 14. The housing 17 accommodates an output shaft 16 of an actuator (not shown) for an electric power steering system (EPS) that applies assist force for assisting a driver in performing a steering operation to a steering system. A rear-side end of the output shaft 16 is press-fitted into a recess formed at a front-side end of the lower shaft 12. Thus, the output shaft 16 is coupled to the front-side end of the lower shaft 12, and is rotatably supported via bearings 19 to 21 in the housing. The output shaft 16 constitutes the steering shaft 3 together with the upper shaft 11 and the lower shaft 12. A worm wheel 22 is fixed to the output shaft 16. A reduction mechanism is formed of the worm wheel 22 and a worm gear (not shown). As the rotation of a motor (not shown) is transmitted to the output shaft 16 via the reduction mechanism, assist force is applied to the steering system.

The steering column 6 is supported by a lower bracket 25 so as to be tiltable about a tilt center shaft O provided on the housing 17. The lower bracket 25 is fixed to a front-side portion of a mounting stay 24 that constitutes part of a body of the vehicle (the front-side portion is closer to the front of the vehicle than the other portion of the mounting stay 24). In addition, the steering column 6 is supported by an upper bracket 26 such that the outer tube 13 is tiltable about the tilt center shaft O and is movable in the axial direction. The upper bracket 26 is fixed to a rear-side portion of the mounting stay 24 (the rear-side portion is closer to the rear of the vehicle than the front-side portion).

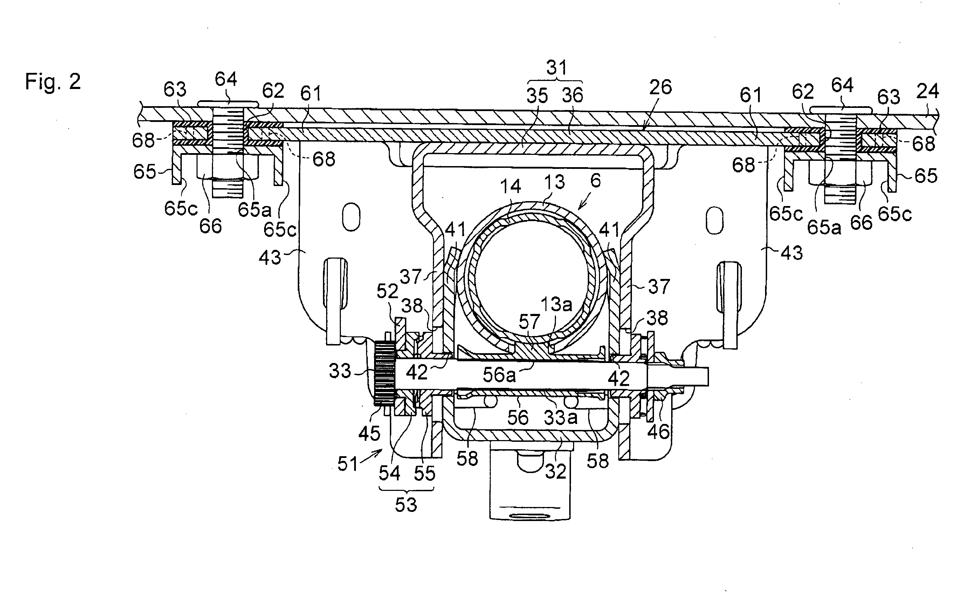

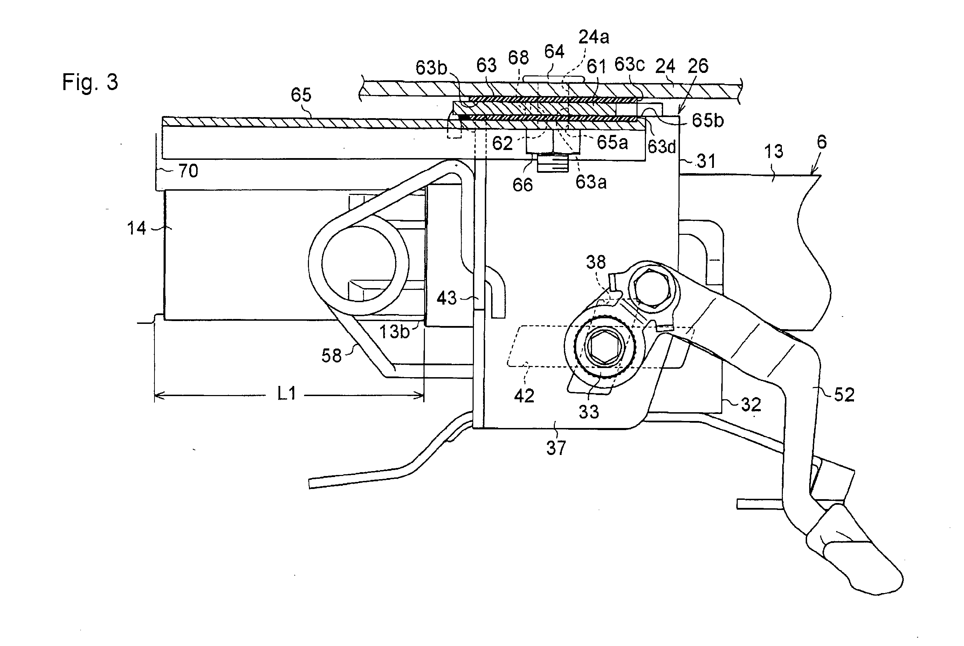

As shown in FIG. 2 and FIG. 3, the upper bracket 26 includes a vehicle body-side bracket 31, a column-side bracket 32, and a support shaft 33. The vehicle body-side bracket 31 is fixed to the mounting stay 24. The outer tube 13 that constitutes the steering column 6 is fixed to the column-side bracket 32. The support shaft 33 couples the vehicle body-side bracket 31 and the column-side bracket 32 to each other.

The vehicle body-side bracket 31 is formed of a clamp portion 35 and a planar plate portion 36. The clamp portion 35 has a C-shape as viewed from the axial direction of the steering shaft 3. The plate portion 36 is fixed to an upper end of the clamp portion 35. The clamp portion 35 has a pair of side plates 37. The side plates 37 respectively have arc-shaped tilt elongated holes 38 that extend along the direction in which the steering column 6 is tilted. The column-side bracket 32 has a C-shape as viewed from the axial direction of the steering shaft 3. The column-side bracket 32 has a pair of side plates 41. The side plates 41 respectively have telescopic elongated holes 42 that extend along the axial direction. The vehicle body-side bracket 31 has reinforcement portions 43 in order to ensure the stiffness of the vehicle body-side bracket 31. The reinforcement portions 43 that extend perpendicularly to the axial direction of the steering shaft 3 are disposed on the right and left sides (right and left sides in FIG. 2) of the side plates 41.

The support shaft 33 has a disc-shaped head portion 45 at its base end (left end in FIG. 2). The head portion 45 is larger in diameter than the support shaft 33. The support shaft 33 is inserted in the tilt elongated holes 38 and the telescopic elongated holes 42 formed respectively in the bracket 31 and the bracket 32 with the column-side bracket 32 arranged inside the vehicle body-side bracket 31. Thus, the support shaft 33 couples the vehicle body-side bracket 31 and the column-side bracket 32 to each other. A nut 46 is fitted to a distal end (right end in FIG. 2) of the support shaft 33. Thus, the support shaft 33 is fixed to the brackets 31, 32 so as to be immovable in the axial direction. Thus, the column-side bracket 32 is tiltable about the tilt center shaft O relative to the vehicle body-side bracket 31 within the range in which the tilt elongated holes 38 are formed. In addition, the column-side bracket 32 is movable in the axial direction within the range in which the telescopic elongated holes 42 are formed. That is, the upper bracket 26 supports the steering column 6 such that the steering column 6 is tiltable within the above-described range and movable in the axial direction within the above-described range.

The steering apparatus 1 includes a lock mechanism 51 for retaining the steering wheel position in the vertical direction and in the axial direction. The lock mechanism 51 includes an operating lever 52 and a cam mechanism 53. The operating lever 52 is provided so as to be pivotable about the support shaft 33 together with the support shaft 33. The cam mechanism 53 is provided between the head portion 45 of the support shaft 33 and one of the side plates 37 of the clamp portion 35. The cam mechanism 53 pushes the side plate 37 toward the axially distal end side (right side in FIG. 2) of the support shaft 33 in accordance with the pivoted position of the operating lever 52 (support shaft 33). The cam mechanism 53 is formed of a first cam member 54 that rotates together with the support shaft 33 and a second cam member 55 that is rotatable relative to the first cam member 54. The first cam member 54 and the second cam member 55 are brought into contact with each other or are spaced apart from each other in accordance with the relative rotational positions of the first and second cam members 54 and 55.

In addition, the lock mechanism 51 includes a cylindrical pushing member 56. The pushing member 56 pushes the inner tube 14 in the axial direction of the steering shaft 3 and upward in an up-down direction of the steering shaft 3 on the basis of the pivoted position of the operating lever 52. A spline fitting portion 33a is formed on the outer periphery of the support shaft 33. A spline fitting portion 56a is formed on the inner periphery of the pushing member 56. The pushing member 56 is spline-fitted to the support shaft 33 to thereby rotate together with the support shaft 33. The pushing member 56 has a cam portion 57 having an arc-shaped cross section. The cam portion 57 is formed at a position eccentric relative to the axis of the support shaft 33. The cam portion 57 is in contact with the inner tube 14 via an opening 13a formed in the lower portion of the outer tube 13. Then, the cam portion 57 pushes the inner tube 14 depending on the pivoted position of the support shaft 33.

When the operating lever 52 is pivoted in one direction, the side plates 37 of the vehicle body-side bracket 31 are frictionally engaged with the side plates 41 of the column-side bracket 32 by the cam mechanism 53, and the outer peripheral surface of the inner tube 14 are frictionally engaged with the inner peripheral surface of the outer tube 13 by the pushing member 56. Thus, the column-side bracket 32 is immovable relative to the vehicle body-side bracket 31, and the steering wheel position is placed in a locked state. On the other hand, when the operating lever 52 is pivoted in the other direction, the pushing force of the cam mechanism 53 no longer acts and the frictional engagement between the side plates 37 of the vehicle body-side bracket 31 and the side plates 41 of the column-side bracket 32 is cancelled, and the pushing force of the pushing member 56 no longer acts and the frictional engagement between the inner tube 14 and the outer tube 13 is cancelled. Thus, the column-side bracket 32 is movable relative to the vehicle body-side bracket 31, and the steering wheel position is placed in an unlocked state.

In the thus configured steering apparatus 1, the lock mechanism 51 is placed in the unlocked state and then the column-side bracket 32 and the steering column 6 are tilted with respect to the vehicle body-side bracket 31. Thus, the steering wheel position is adjustable in the vertical direction within the range of the tilt elongated holes 38. In addition, the outer tube 13 is moved relative to the inner tube 14, the upper shaft 11 is moved relative to the lower shaft 12 and the column-side bracket 32 is moved in the axial direction relative to the vehicle body-side bracket 31. Thus, the steering wheel position is adjustable in the axial direction within the range of the telescopic elongated holes 42. Note that, in the present embodiment, the support shaft 33, the tilt elongated holes 38, the column-side bracket 32 and the outer tube 13 constitute a tilt mechanism, and the support shaft 33, the telescopic elongated holes 42, the column-side bracket 32 and the outer tube 13 constitute a telescopic mechanism.

The upper bracket 26 is configured as a so-called breakaway bracket that is detached from the mounting stay 24 when a load (collapsing load) higher than or equal to a predetermined load, which is directed toward the front of the vehicle, is applied to the upper bracket 26, so that the steering column 6 is detached from the mounting stay 24 that constitutes part of the body of the vehicle, for example, in the event of a secondary collision.

The plate portion 36 of the vehicle body-side bracket 31 has extended portions 61 that extend on respective sides of the clamp portion 35 in the vehicle-width direction. Each of the extended portions 61 has a cutout recessed portion 62 that extends in the axial direction of the steering shaft 3 and that is open toward the rear of the vehicle. The cutout recessed portion 62 is a recess at which a capsule 63 is fitted to the plate portion 36. Each of the cutout recessed portions 62 has an arc-shaped portion 62a and an opening portion 62b. The arc-shaped portion 62a corresponds to a position at which a bolt 64 is inserted. The opening portion 62b extends toward the rear of the vehicle. The opening portion 62b has such a width that extended portion 61 is able to be slidingly inserted in a cutout groove 63b of the capsule 63. The capsules 63 are detachably fixed to the extended portions 61 of the plate portion 36 that constitutes the upper bracket 26 (vehicle body-side bracket 31) in a state where the extended portions 61 have been slidingly inserted at the cutout recessed portions 62 in the cutout grooves 63b of the capsules 63. In a state where the capsules 63 are held between the mounting stay 24 and guide members 65, nuts 66 are respectively fastened to the shanks of the bolts 64 that are inserted through bolt insertion holes 24a, 63a and 65a from above the mounting stay 24 and that protrude downward from the guide members 65. Thus, the upper bracket 26 is fixed to the vehicle body-side mounting stay 24.

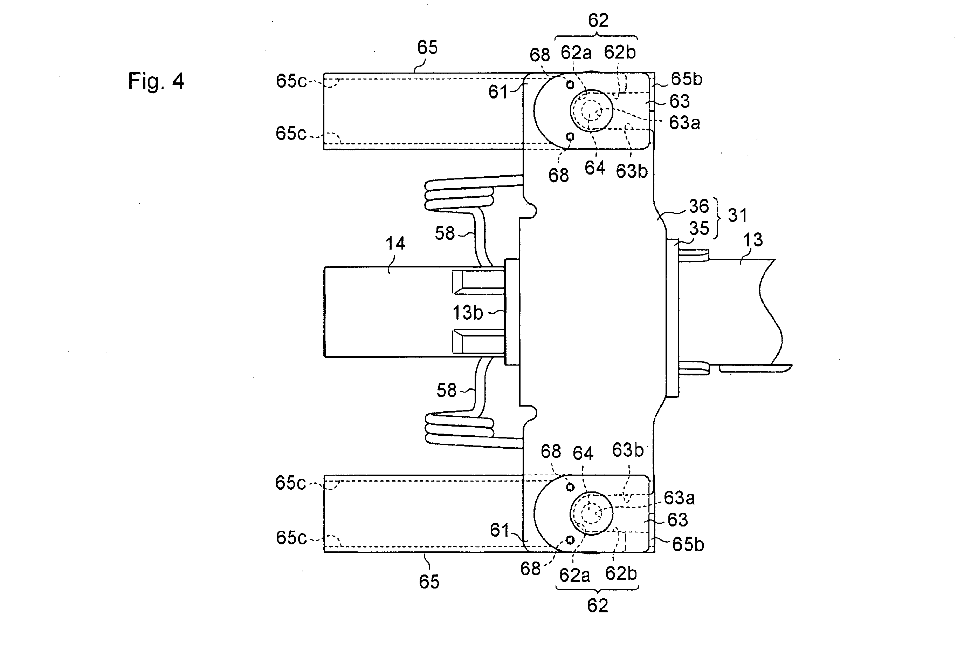

Here, the configuration of each capsule 63 will be described in detail. As shown in FIG. 2 to FIG. 4, each of the capsules 63 interposed between the mounting stay 24 and the guide members 65 has the bolt insertion hole 63a that extends through the capsule 63 in the thickness direction at substantially the center portion in plan view shown in FIG. 4. Each of the capsules 63 has the cutout groove 63b at its side peripheral portion, except its rear end portion, along the circumferential direction. Each capsule 63 is slidingly fitted to the inner peripheral portion of the extended portion 61, which defines the cutout recessed portion 62, from the rear side so that the extended portion 61 is inserted in the cutout groove 63b. Thus, the capsule 63 is fixed to the extended portion 61. Each capsule 63 has a first holding portion 63c and a second holding portion 63d that are arranged above and below the cutout groove 63, respectively, and that extend in the axial direction of the steering shaft 3. The inner peripheral portion of each extended portion 61, which defines the cutout recessed portion 62, is held between the first holding portion 63c and the second holding portion 63d with no gap or with a slight gap.

Each capsule 63 is made of resin, and is integrally molded with the plate portion 36 of the vehicle body-side bracket 31. Each capsule 63 is molded from resin at a predetermined region including the cutout recessed portion 62 of the plate portion 36, and is, for example, insert-molded into a shape having the cutout groove 63b into which the inner peripheral portion, which defines the cutout recessed portion 62, is fitted. The plate portion 36 has a single small hole or recess or a plurality of small holes or recesses in a region near each of the cutout recessed portions 62. Molten resin injected into a die of a molding apparatus to mold the capsules 63 is filled into the holes or recesses to thereby form shear pins 68.

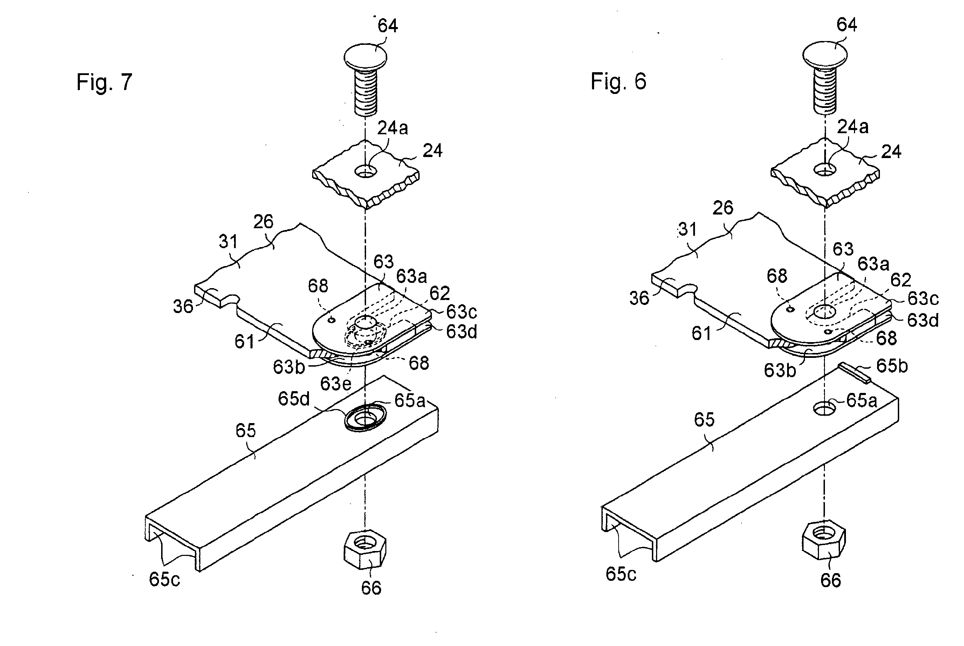

In addition, as shown in FIG. 6, each guide member 65 is fitted to the vehicle body-side mounting stay 24 in a state where each guide member 65 is arranged below the corresponding capsule 63 and the plate portion 36. Each guide member 65 is a rod made of metal (for example, iron or an aluminum alloy) having a predetermined length and an inverted U-shape in cross section. Each guide member 65 has the bolt insertion hole 65a, through which the bolt 64 is inserted, at its longitudinal one end portion (rear end portion). Each guide member 65 has a quadratic prism-shaped restricting wall 65b that is formed at its upper face rear end portion so as to extend vertically from the upper face. Each guide member 65 has a pair of ribs 65c, which extend downward, at its respective ends in the widthwise direction. The guide member 65 is reinforced by these ribs 65c.

When the upper bracket 26 is fitted to the body of the vehicle, the capsules 63, fixed to the extended portions 61 of the upper bracket 26, and the guide members 65 are arranged below the mounting stay 24 in this order from the upper side, and the positions of the bolt insertion holes 24a, 63a and 65a are aligned with each other, as shown in FIG. 6. At this time, each guide member 65 is arranged so as to extend toward the front of the vehicle with the restricting wall 65b in contact with the rear end face of the corresponding capsule 63. The shank of the bolt 64 is inserted through the corresponding bolt insertion holes 24a, 63a and 65a from above the mounting stay 24, and the nut 66 is fastened to the shank protruding downward from the guide member 65. When the nut 66 is almost completely fastened, the guide member 65 tends to rotate together with the nut 66 due to friction between the nut 66 and the guide member 65. However, the restricting wall 65b contacts the rear end face of the capsule 63 to thereby restrict rotation of the guide member 65. Therefore, the longitudinal direction of each guide member 65 is parallel to the vehicle longitudinal direction, and each guide member 65 is fitted so as to extend from the fixing portion (fastening portion), at which the guide member 65 is fixed to the corresponding capsule 63, toward the front of the vehicle (see FIG. 3 and FIG. 4). As described above, the upper bracket 26 is fitted to the body of the vehicle by fastening the nuts 66 to the shanks of the bolts 43 with the capsules 63 held between the mounting stay 24 and the guide members 65.

In the state shown in FIG. 3, when a load higher than or equal to a predetermined load (collapsing load), which is directed toward the front of the vehicle, is applied to the steering apparatus due to an impact at the time of a secondary collision, each shear pin 68 breaks, and the plate portion 36 of the upper bracket 26 is detached from the capsules 63. Then, the outer tube 13 makes collapsing movement toward the front of the vehicle (left side in FIG. 3) along the inner tube 14, and the outer tube 13 moves over a collapsing movement distance L1 (see FIG. 1 and FIG. 3) until the lower end portion 13b contacts a stopper 70 (end face) of a rear-side end face of the housing 17. Energy at the time of the secondary collision is absorbed by shear energy of the shear pins 68, sliding resistance at the time when the outer tube 13 slides over the inner tube 14, sliding resistance at the time when the upper bracket 26 slides over the guide members 65, and deformation of other impact absorbing members, or the like. In this way, energy absorption in the event of a secondary collision is carried out at various portions of the steering apparatus 1, and the steering apparatus 1 is designed such that energy absorbed at various portions becomes an appropriate value. If absorption energy varies among various portions in the steering apparatus 1, the energy absorption characteristic in the event of a secondary collision deviates from an ideal characteristic. Therefore, it is necessary to reduce variations in absorption energy among various portions. In the present embodiment, the paired guide members 65 are provided, and the lower faces of the extended portions 61 on respective sides of the upper bracket 26 in the vehicle-width direction are caused to slide over the upper faces of the guide members 65. Therefore, a relatively wide sliding area is ensured to allow a relatively large amount of energy to be absorbed by sliding friction. Note that, in the present embodiment, an impact absorbing mechanism is formed of the structure for absorbing the above impact energy. The structure includes the outer tube 13, the inner tube 14, and the like.

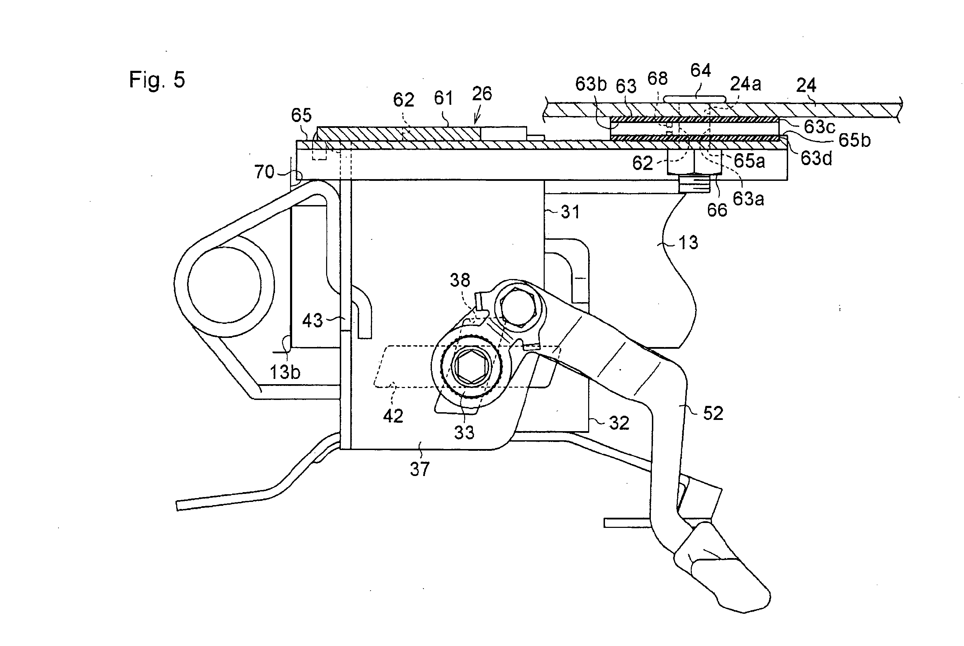

The length of a portion of each guide member 65, which extends from the bolt fastening position toward the front of the vehicle, is set to such a value that the plate portion 36 of the upper bracket 26 is kept supported on the upper faces of the guide members 65 even when the outer tube 13 moves over the collapsing movement distance L1 and then the lower end portion 13b contacts the stopper 70 (the state shown in FIG. 5). Therefore, in the entire process in which the outer tube 13 makes collapsing movement, the upper bracket 26 is supported by the guide members 65.

Next, the operation of the thus-configured steering apparatus 1 will be described. In the event of a secondary collision, that is, when the driver collides with the steering wheel 2, if a load higher than or equal to the predetermined load, which is directed toward the front of the vehicle, is applied to the steering apparatus 1, the shear pins 68 break, and the plate portion 36 of the upper bracket 26 is detached from the capsules 63. As a result, the steering column 6 makes collapsing movement toward the front of the vehicle (left side in FIG. 3). More specifically, the outer tube 13 slides toward the front of the vehicle along the inner tube 14, while making collapsing movement until the lower end portion 13b contacts the stopper 70 on the rear-side end face of the housing 17. That is, the outer tube 13 makes collapsing movement from the state shown in FIG. 3 to the state shown in FIG. 5. Energy at the time of the secondary collision is absorbed in the collapsing movement process as shear energy of the shear pins 68, sliding resistance of the outer tube 13 relative to the inner tube 14, sliding resistance between the upper bracket 26 and the guide members 65, and energy of deformation, or the like, of impact absorbing members.

After the shear pins 68 break, the plate portion 36 moves along the cutout grooves 63b of the capsules 63, is ultimately detached from the capsules 63, and slightly drops by an amount corresponding to the thickness of the second holding portion 63d of the capsule 63 onto the upper faces of the guide members 65. At this time, a gap having a length corresponding to the sum of the thicknesses of the first holding portion 63c and second holding portion 63d of each capsule 63 is ensured between the upper face of the plate portion 36 placed on the upper faces of the guide members 65 and the lower face of the mounting stay 24. As shown in FIG. 5, the plate portion 36 slides over the upper faces of the guide members 65 with a gap formed on the plate portion 36. Therefore, variations in sliding resistance between the upper bracket (plate portion 36) and the guide members 65 is reduced.

The amount of energy absorbed at the time when the steering column 6 contracts is set in advance so as to be a desired value. When variations in sliding resistance at the time when the plate portion 36 slides over the upper faces of the guide members 65 are great, absorption energy deviates from a desired value. For example, in the technique described in JP 2011-025856 A, the first rearward extending portions (which correspond to the guide members) that extend from the upper attachment bracket (upper bracket) toward the rear of the vehicle is configured to make collapsing movement toward the front of the vehicle together with the outer tube. Therefore, the first rearward extending portions slide along the grooves of the capsules while being kept inserted in these grooves over the entire range of collapsing movement.

Therefore, both upper and lower faces and side faces of portions of the first rearward extending portions, which are inserted in the grooves of the capsules, slide over the inner wall surfaces of the capsules, which define the grooves. In this case, because the first vehicle rearward extending portions are inserted in the grooves of the capsules via a slight gap, the first rearward extending portions slide in the mode that varies from moment to moment during collapsing movement. For example, both upper and lower faces of each first rearward extending portion slide over the inner wall surfaces, only the lower face of each first rearward extending portion slides over the inner wall surface, or two faces that are the lower face and the side face of each first rearward extending portion slide over the inner wall surfaces. Therefore, sliding resistance tends to vary. Due to the variations in sliding resistance, the amount of energy absorbed at the time of collapsing movement of the steering column tends to vary.

In contrast to this, in the first embodiment of the invention, a gap is ensured between the mounting stay 24 and the plate portion 36 placed on the upper faces of the guide members 65, and is sufficiently wider than the gap formed when the plate portion 36 is inserted in the cutout grooves 63b of the capsules 63. Thus, almost only the lower face (single face) of the plate portion 36 slides over the guide members 65. Therefore, variations in sliding resistance between the upper bracket 26 and the guide members 65 reduces, and it is possible to reduce a deviation of absorption energy from an ideal value in the event of a secondary collision.

In addition, even when the outer tube 13 finishes collapsing movement over the collapsing movement distance L1 shown in FIG. 1 and FIG. 3 and contacts the stopper 70, the steering column 6 is not displaced excessively downward because the upper bracket 26 is supported by the guide members 65. Therefore, even after detachment of the steering column 6, the driver is able to operate the steering wheel 2 to drive the vehicle.

Furthermore, because the guide members 65 extend toward the front of the vehicle, a relatively wide component arrangement space is ensured in an area closer to the driver seat than the upper bracket 26 of the steering apparatus 1. In the steering apparatus described in JP 2011-025856A, the first rearward extending portions that extend from the upper attachment bracket (upper bracket) toward the rear of the vehicle reduces a component arrangement space on the driver seat side of the steering apparatus 1. In contrast to this, in the steering apparatus 1 according to the present embodiment, the guide members 65 are fixed to the vehicle body (mounting stay 24), so the guide members 65 extend toward the front of the vehicle. Therefore, a relatively wide component arrangement space is ensured on the rear side with respect to the upper bracket 26.

In addition, when the steering apparatus 1 is fitted to the vehicle body, the tilt center shaft O on the lower side, or the like, is first fixed to the vehicle body, and then the upper bracket 26 is fitted to the vehicle body-side mounting stay 24. At this time, the steering column 6 is supported by one hand, and the nuts 66 are fastened to the shanks of the bolts 64 that are inserted through the bolt insertion holes 24a, 63a and 65a formed in the mounting stay 24, the capsules 63 and the guide members 65, respectively. Prior to this fastening, the restricting walls 65b of the guide members 65 arranged so as to extend toward the front of the vehicle are brought into contact with the rear end faces of the capsules 63. Thus, the rotation of the guide members 65 about the shanks of the bolts 64 is restricted. Therefore, friction between the nuts 66 and the guide members 65 becomes high at the last stage of fastening of the nuts 66, and even if force (friction force) in such a direction that the guide members 65 rotate together with the nuts 66 acts on the guide members 65, the rotation of the guide members 65 is restricted due to the contact of the restricting walls 65b with the rear end faces of the capsules 63. Thus, the guide members 65 are fixed while being kept extending toward the front of the vehicle without being rotated. In addition, after the guide members 65 are fitted, the rear end faces of the capsules 63 contact the restricting walls 65b. Therefore, the guide members 65 are kept extending toward the front of the vehicle without being rotated even when the guide members 65 receive vibrations, or the like, during travel of the vehicle. Therefore, in the event of a secondary collision, the steering column 6 is kept supported by the guide members 65 until the end of collapsing movement.

As described above, according to the first embodiment of the invention, the following advantageous effects are obtained.
(1) In a state where the guide members 65 are arranged below the upper bracket 26 (that is, arranged on the opposite side of the upper bracket 26 from the vehicle body-side mounting stay 24), the guide members 65 are fixed to the mounting stay 24 with the capsules 63 interposed between the guide members 65 and the mounting stay 24, and are extended toward the front of the vehicle. Therefore, it is possible to prevent excessive downward displacement of the steering column 6 in the event of a secondary collision, and it is possible to ensure relatively wide arrangement space on the rear side (driver seat side) with respect to the upper bracket 26 of the steering apparatus 1.
(2) A relatively wide gap is ensured above the plate portion 36 that slides over the upper faces of the guide members 65 during collapsing movement. Therefore, it is possible to reduce variations in sliding friction between the plate portion 36 and the guide members 65. In the technique described in JP 2011-025856A, there are a plurality of sliding sites, that is, both the upper and lower faces and the side faces of the first rearward extending portions that keep sliding over the inner wall surfaces of the capsules, which define the grooves, until the end of collapsing movement, and variations in sliding resistance become relatively large due to variations of the sliding portions. This causes variations in the amount of energy absorbed. In contrast to this, in the first embodiment of the invention, only the lower face of the plate portion 36 slides over the guide members 65. Therefore, variations in sliding resistance are unlikely to occur. Thus, it is possible to reduce variations in the amount of energy that is absorbed by the impact absorbing mechanism of the steering apparatus 1 in the event of a secondary collision.
(3) The length of a portion of each guide member 65, which extends from the fastening position of the bolt 64 toward the front of the vehicle, is set to such a value that the upper bracket 26 is kept supported even if the outer tube 13 moves over the collapsing movement distance L1 toward the front of the vehicle and contacts the stopper 70. Therefore, it is possible to further reliably prevent excessive downward displacement of the steering column 6 in the event of a secondary collision.
(4) Because each guide member 65 has the restricting wall 65b, it is possible to fasten the nut 66 to the shank of the bolt 64 with the restricting wall 65b in contact with the rear end face of the capsule 63 to restrict rotation of the guide member 65. Therefore, it is possible to reliably fix the guide members 65 such that the guide members 65 extend toward the front of the vehicle, and it is possible to avoid an inconvenient situation where a worker needs to fasten the nut 66 while holding the guide member 65 to prevent the guide member 65 from rotating together with the nut 66. In addition, even after the steering apparatus 1 is fitted, it is possible to avoid a change in the orientation of each guide member 65 due to vibrations, or the like, during travel of the vehicle. Therefore, the guide members 65 are kept extending toward the front of the vehicle over a long period of time.
(5) Because each guide member 65 has the ribs 65c, the stiffness and strength of each guide member 65 is made high relative to its thickness. Therefore, it is possible to reliably support the steering apparatus 1 that is detached from the body of the vehicle to make collapsing movement. For example, it is possible to also avoid a change of the position of the steering apparatus 1 due to warpage or deformation of the guide members 65.
(6) Only addition of the guide members 65 separately formed from the steering apparatus 1 is required. Therefore, when the upper bracket 26 of the conventional steering apparatus 1 is fitted to the vehicle body-side mounting stay 24, the guide members 65 just need to be fitted to the lower sides of the capsules 63. Therefore, a major design change to the existing steering apparatus 1 is not required, and the steering apparatus 1 that has the steering apparatus downward displacement prevention structure, including the guide members 65, according to the first embodiment of the invention is relatively easily obtained. For example, in JP 2011-025856A, the first rearward extending portions need to be formed on the upper attachment bracket so as to extend therefrom. Therefore, a relatively major design change of the steering apparatus is required. In contrast to this, in the steering apparatus 1 according to the first embodiment of the invention, the guide members 65, which are separate components, are just added. Therefore, almost no design change of the steering apparatus 1 is required.
(7) The guide members 65 are fixed to the vehicle body side member instead of being fixed to the steering column 6. Therefore, the steering apparatus 1 is made relatively light despite the provision of the steering apparatus downward displacement prevention mechanism. That is, in comparison with the steering apparatus described in JP 2011-025856A in which the first rearward extending portions are formed on the upper attachment bracket so as to extend therefrom, the steering apparatus 1 is made relatively light because the first rearward extending portions are no longer required.
(8) The guide members 65 are separate components. Therefore, in comparison with the case where the guide members are integrally formed with the vehicle body as in the case where, for example, L-shaped guide members extend from the mounting stay 24, the efficiency of a work for fitting the steering apparatus 1 to the vehicle body-side mounting stay 24 improves. That is, when the guide members are integrally formed with the vehicle body, the guide members become obstacles when the upper bracket 26 is arranged above the guide members and, as a result, a fitting work is cumbersome. However, when the guide members are separate components as in the case of the first embodiment of the invention, such an inconvenience does not occur.

Note that the above-described embodiment may be modified into the following alternative embodiments.

The restricting portion of each guide member is not limited to the restricting wall 65b that is brought into contact with the rear end face of the capsule 63. For example, as shown in FIG. 7, an elliptical annular protrusion 65d is formed around the bolt insertion hole 65a of each guide member 65, and an annular recess 63e that is engageable with the annular protrusion 65d is formed on the lower face of the capsule 63 (second embodiment). Then, at the time of fitting each guide member 65, the annular protrusion 65d is fitted into the annular recess 63e to thereby restrict the rotation of the guide member 65 that extends toward the front of the vehicle. With this configuration as well, it is possible to avoid an inconvenience that, at the time of finishing fastening the nut 66 to the shank of the corresponding bolt 64, the guide member 65 rotates together with the nut 66 due to friction between the nut 66 and the guide member 65 and the direction in which the guide member 65 extends is changed from the direction toward the front of the vehicle. Note that the shape of each of the annular protrusions 65d and the annular recesses 63e is not limited to an ellipse. The shape just needs to be other than a circle, and may be, for example, a polygonal shape, such as a triangular shape or a rectangular shape. In addition, the shape may also be part of an ellipse or part of a polygonal shape.

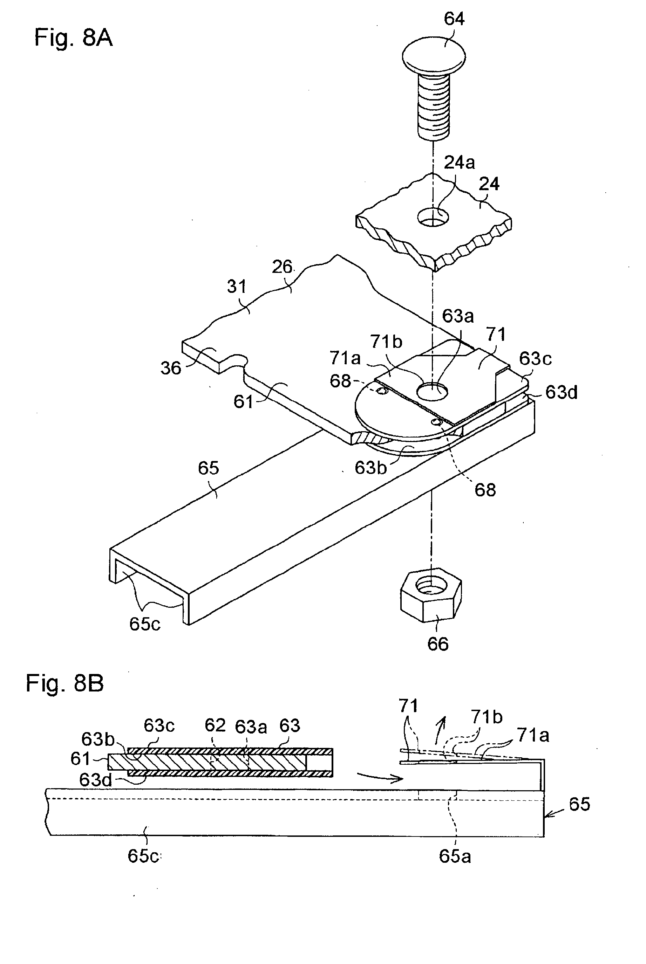

In addition, as shown in FIG. 8A and FIG. 8B, a holding piece 71 may be provided at the rear end portion (base end portion) of each guide member 65 as the restricting portion (third embodiment). Each holding piece 71 is formed by bending a plate member into an L-shape in cross section in side view shown in FIG. 8B. A plate portion 71a of each holding piece 71, which faces the upper face of the guide member 65, has a bolt insertion hole 71b at a position corresponding to the bolt insertion hole 63a of the capsule 63 held between the upper face of the guide member 65 and the plate portion 71 a. The holding piece 71 has elasticity, and the gap between the holding piece 71 and the upper face of the guide member 65 is slightly smaller at the distal end side (front-side) of the plate portion 71a than the thickness of the capsule 65. When the capsule 63 is held by the guide member 65, the distal end side of the holding piece 71 is slightly lifted, and the capsule 63 is inserted to a position below the holding piece 71 from the increased gap between the upper face of the guide member 65 and the holding piece 71, as shown in FIG. 8B. Then, when the lifted holding piece 71 is released, the capsule 63 is held together with the guide member 65 due to the elasticity of the holding piece 71 (the state shown in FIG. 8A). That is, the guide member 65 is held by the upper bracket 26 via the capsule 63. Therefore, when the steering apparatus 1 is fitted to the vehicle body-side mounting stay 24, the steering column 6 is supported by one hand, and a work for fastening the nut 66 to the shank of the bolt 64 inserted through the bolt insertion holes 24a, 71b, 63a and 65a is carried out by the other hand. Therefore, in comparison with the configuration according to the first embodiment, the efficiency of a work for fitting the steering column 6 to the body of the vehicle improves.

Each guide member need not be a separate component, and may be a component fixed to the steering apparatus 1 in advance. For example, the guide member may be a guide member integrated with the capsule. In this case, the capsule-integrated guide member may be made of resin or metal, and may be a composite material component in which the capsule portion is made of resin and the guide portion is made of metal. Note that, in the capsule-integrated guide member, a bolt insertion hole extends through both the capsule portion and the guide portion, and the capsule portion and the guide portion both are fixed to the vehicle body-side mounting stay 24 by fastening the nut 66 to the bolt 64.

Each guide member may be integrally formed with the body of the vehicle so as to extend therefrom. For example, a substantially L-shaped guide member may be extended from the mounting stay 24 toward the front of the vehicle.

The restricting portion of each guide member may be brought into contact with a member other than the capsule 63 to restrict rotation of the guide member. For example, the restricting wall may be brought into contact with a predetermined portion (for example, the extended portion 61) of the vehicle body-side bracket 31 to restrict rotation of the guide member.

Each capsule (detachable member) may be bonded to the upper bracket 26 using an adhesive at a bonding strength at which the capsule is detachable from the upper bracket 26 under a load higher than or equal to the predetermined load. Furthermore, each capsule 63 may be fixed to the vehicle body-side bracket 31 by welding, such as thermal welding or vibration welding. In the case of welding, a pin is formed on each capsule in advance, the capsule is fitted to the cutout recessed portion 62 of the plate portion 36 with the pin inserted in the hole, and then the capsule is subjected to welding to fix the capsule with a shear pin. Of course, a capsule having no shear pin may also be fixed by welding.

Each capsule may be configured to be detached from the upper bracket 26 when a load that exceeds a static friction force (set load) between the frictionally engaged two members (the capsule and the upper bracket) is applied in the event of a secondary collision. For example, a capsule mechanism has a flat plate capsule member and an annular diaphragm spring interposed between the plate portion 36 of the upper bracket 26 and the mounting stay 24. The guide member 65 arranged below the capsule mechanism is fixed to the mounting stay 24 with the diaphragm spring elastically compressed by the fastening of the nut 66 to the bolt 64. When the force caused by a load in the event of a secondary collision exceeds a static friction force that is exerted between the capsule member and both the plate portion 36 and the mounting stay 24 due to an urging force of the diaphragm spring, the upper bracket is detached from the capsule mechanism.

In the above embodiment, the steering apparatus may have only the telescopic adjustment function or only the tilt adjustment function.

The impact absorbing mechanism need not be a column contraction type, and may be a bending type. The bending-type impact absorbing mechanism is configured such that a predetermined portion, such as a lower portion, of the steering column plastically deforms to bend to thereby absorb impact energy. In addition, the impact absorbing mechanism may be of a type that is configured to rip an impact absorbing member, such as a ripping plate, to thereby absorb impact energy.

In the above embodiment, the steering apparatus has the tilt adjustment function and the telescopic adjustment function. However, the invention is not limited to this configuration. The steering apparatus may have only the telescopic adjustment function or only the tilt adjustment function. Furthermore, the steering apparatus may have neither the tilt adjustment function nor the telescopic adjustment function.

In the above embodiment, the steering apparatus 1 is configured as a so-called column assist-type electric power steering system (EPS) that applies assist force to the output shaft 16 that constitutes the column shaft 4. However, the invention is not limited to this configuration. For example, the invention may be applied to an EPS, other than a column assist-type EPS, such as a so-called rack assist-type EPS, a hydraulic power steering apparatus or a steering apparatus with no power assist.

## Claims

1. A steering apparatus comprising:
a steering column (6) that supports a steering shaft (3) to which a steering wheel is coupled such that the steering shaft is rotatable, and that has an impact absorbing mechanism that is able to absorb an impact due to a secondary collision;
a mounting member (26, 31, 61) that is used to mount the steering column (6) to a body of a vehicle; and
a detachable member (63) that is fixed to the mounting member (26, 31, 61) so as to be detachable from the mounting member (26, 31, 61) when a load higher than or equal to a predetermined load, which is directed toward a front of the vehicle, is applied to the steering apparatus at a time of the secondary collision; **characterized by**
a guide member (65) that is arranged at a position on an opposite side of the mounting member (26, 31, 61) from the body of the vehicle, and that is fixed to the body of the vehicle together with the detachable member 63) such that the guide member (65) extends toward the front of the vehicle.

2. The steering apparatus according to claim 1, wherein
the guide member (65) is a separate member from the vehicle body.

3. The steering apparatus according to claim 1 or 2, wherein
the guide member (65) that extends toward the front of the vehicle has such a length that the guide member keeps supporting the mounting member (26, 31, 61) even when the steering column makes collapsing movement until the steering column contacts an end face (70) while absorbing the impact.

4. The steering apparatus according to any one of claims 1 to 3, wherein:
the detachable member (63) has a groove (63b) that extends in a vehicle longitudinal direction and that has such a groove width that an extended portion (61) of the mounting member (26, 31, 61) is able to be inserted in the groove (63b); and
the detachable member (63) is fixed to the mounting member (26, 31, 61) with the extended portion (61) inserted in the groove (63b) so as to be slidable toward the front of the vehicle.

5. The steering apparatus according to any one of claims 1 to 4, wherein
the guide member (65) has a restricting portion (65b; 71) that restricts a change in a direction in which the guide member (65) extends from a direction toward the front of the vehicle.

6. The steering apparatus according to claim 5, wherein
the restricting portion (65b; 71) engages with the detachable member (63) to restrict the change in the direction in which the guide member (65) extends.

7. The steering apparatus according to claim 6, wherein
the restricting portion is a holding piece (71) that is able to hold the detachable member (63) between the restricting portion (71) and the guide member (65).

## Patentansprüche

1. Lenkvorrichtung, mit:
einer Lenksäule (6), die eine Lenkwelle (3) stützt, an der ein Lenkrad gekoppelt ist, derart, dass die Lenkwelle drehbar ist, und die einen Stoßabsorptionsmechanismus aufweist, der geeignet ist, einen durch eine sekundäre Kollision verursachten Stoß zu absorbieren;
einem Montageelement (26, 31, 61), das dazu verwendet wird, um die Lenksäule (6) an eine Fahrzeugkarosserie zu montieren; und
einem lösbaren Element (63), das an das Montageelement (26, 31, 61) so befestigt ist, um von dem Montageelement (26,31,61) lösbar zu sein, wenn eine Last, welche größer oder gleich einer vorbestimmten Last ist und in Richtung einer Front des Fahrzeugs gerichtet ist, zu einer Zeit der sekundären Kollision auf die Lenkvorrichtung wirkt;
**gekennzeichnet durch**
ein Führungselement (65), das an einer Position, welche an einer gegenüber liegenden Seite des Montageelement (26, 31, 61) von der Fahrzeugkarosserie angeordnet ist, und das an die Fahrzeugkarosserie zusammen mit dem lösbaren Element (63) befestigt ist, derart, dass das Führungselement (65) in Richtung der Front des Fahrzeugs verläuft.

2. Lenkvorrichtung nach Anspruch 1, wobei das Führungselement (65) ein von der Fahrzeugkarosserie separates Element ist.

3. Lenkvorrichtung nach Anspruch 1 oder 2, wobei das Führungselement (65), das sich in Richtung der Front des Fahrzeugs erstreckt, eine solche Länge hat, dass das Führungselement (65) das Montageelement (26, 31, 61) selbst dann unterstützt, wenn die Lenksäule eine kollabierende Bewegung ausführt, bis die Lenksäule eine Endfläche (70) berührt, während der Stoß absorbiert wird.

4. Lenkvorrichtung nach einem der Ansprüche 1 bis 3, wobei:
das lösbare Element (63) eine Nut (63b) aufweist, die sich in einer Fahrzeuglängsrichtung erstreckt und solch eine Nutbreite aufweist, dass ein erweiterter Abschnitt (61) des Montageelements (26, 31, 61) in die Nut (63b) eingeführt werden kann; und
das lösbare Element (63) an das Montageelement (26, 31, 61) befestigt ist, wobei der erweiterte Abschnitt (61) so in die Nut (63b) eingeführt ist, um verschiebbar in Richtung der Front des Fahrzeugs zu sein.

5. Lenkvorrichtung nach einem der Ansprüche 1 bis 4, wobei das Führungselement (65) einen Begrenzungsabschnitt (65b; 71) aufweist, welcher eine Änderung in eine Richtung, in welche das Führungselement (65) sich von einer Richtung zur Front des Fahrzeugs hin erstreckt, beschränkt.

6. Lenkvorrichtung nach Anspruch 5, wobei der Beschränkungsabschnitt (65b; 71) mit dem lösbaren Element (63) in Eingriff gelangt, um die Änderung in die Richtung, in welche sich das Führungselement (65) erstreckt, zu beschränken.

7. Lenkvorrichtung nach Anspruch 6, wobei der Beschränkungsabschnitt ein Halteelement (71) ist, welches dazu geeignet ist, das lösbare Element (63) zwischen dem Beschränkungsabschnitt (71) und dem Führungselement (65) zu halten.

## Revendications

1. Dispositif de direction comprenant :
une colonne de direction (6) qui supporte un arbre de direction (3) auquel un volant est couplé, de sorte que l'arbre de direction peut tourner, et qui a un mécanisme d'absorption de choc qui peut absorber un choc dû à une collision secondaire ;
un élément de montage (26, 31, 61) qui est utilisé pour monter la colonne de direction (6) sur un corps d'un véhicule; et
un élément détachable (63) qui est fixé sur l'élément de montage (26, 31, 61) afin de pouvoir être détaché de l'élément de montage (26, 31, 61) lorsqu'une charge supérieure à ou égale à une charge prédéterminée, qui est détectée vers une partie avant du véhicule, est appliquée sur le dispositif de direction au moment de la collision secondaire ; **caractérisé par** :
un élément de guidage (65) qui est agencé dans une position sur un côté opposé de l'élément de montage (26, 31, 61) par rapport au corps du véhicule, et qui est fixé sur le corps du véhicule conjointement avec l'élément détachable (63) de sorte que l'élément de guidage (65) s'étend vers l'avant du véhicule.

2. Dispositif de direction selon la revendication 1, dans lequel :
l'élément de guidage (65) est un élément séparé du corps de véhicule.

3. Dispositif de direction selon la revendication 1 ou 2, dans lequel :
l'élément de guidage (65) qui s'étend vers l'avant du véhicule a une longueur telle que l'élément de guidage continue à supporter l'élément de montage (26, 31, 61) même lorsque la colonne de direction fait un mouvement d'affaissement jusqu'à ce que la colonne de direction entre en contact avec une face d'extrémité (70) tout en absorbant le choc.

4. Dispositif de direction selon l'une quelconque des revendications 1 à 3, dans lequel :
l'élément détachable (63) a une rainure (63b) qui s'étend dans une direction longitudinale de véhicule et qui a une largeur de rainure telle, qu'une partie étendue (61) de l'élément de montage (26, 31, 61) peut être insérée dans la rainure (63b) ; et
l'élément détachable (63) est fixé sur l'élément de montage (26, 31, 61) avec la partie étendue (61) insérée dans la rainure (63b) afin de pouvoir coulisser vers la partie avant du véhicule.

5. Dispositif de direction selon l'une quelconque des revendications 1 à 4, dans lequel :
l'élément de guidage (65) a une partie de restriction (65b ; 71) qui limite un changement dans une direction dans laquelle l'élément de guidage (65) s'étend à partir d'une direction vers l'avant du véhicule.

6. Dispositif de direction selon la revendication 5, dans lequel :
la partie de restriction (65b ; 71) se met en prise avec l'élément détachable (63) pour limiter le changement de direction dans lequel l'élément de guidage (65) s'étend.

7. Dispositif de direction selon la revendication 6, dans lequel :
la partie de restriction est une pièce de support (71) qui peut supporter l'élément détachable (63) entre la partie de restriction (71) et l'élément de guidage (65).
